(19) Europäisches Patentamt
European Patent Office
Office européen des brevets

(11) **EP 4 108 474 B1**

(12) **EUROPEAN PATENT SPECIFICATION**

(45) Date of publication and mention
of the grant of the patent:
**04.12.2024   Bulletin 2024/49**

(21) Application number: **22176940.9**

(22) Date of filing: **02.06.2022**

(51) International Patent Classification (IPC):
**B60C 9/20** *(2006.01)*        **B60C 9/22** *(2006.01)*

(52) Cooperative Patent Classification (CPC):
**B60C 9/2009;** B60C 2009/0014; B60C 2009/2048;
B60C 2009/2067; B60C 2009/2077;
B60C 2009/2083; B60C 2009/209;
B60C 2009/2214; B60C 2009/2247;
B60C 2009/2252; B60C 2009/2257

(54) **TIRE**

REIFEN

PNEUMATIQUE

(84) Designated Contracting States:
**AL AT BE BG CH CY CZ DE DK EE ES FI FR GB
GR HR HU IE IS IT LI LT LU LV MC MK MT NL NO
PL PT RO RS SE SI SK SM TR**

(30) Priority: **22.06.2021   JP 2021103397**

(43) Date of publication of application:
**28.12.2022   Bulletin 2022/52**

(73) Proprietor: **Sumitomo Rubber Industries, Ltd.
Kobe-shi, Hyogo-ken 651-0072 (JP)**

(72) Inventors:
• **MISAKI, Momoka
Kobe-shi, 651-0072 (JP)**
• **SUZUKI, Masumi
Kobe-shi, Hyogo, 651-0072 (JP)**
• **MIKI, Takashi
Kobe-shi, 651-0072 (JP)**
• **MIAO, Dong
Kobe-shi, Hyogo, 651-0072 (JP)**

(74) Representative: **Manitz Finsterwald
Patent- und Rechtsanwaltspartnerschaft mbB
Martin-Greif-Strasse 1
80336 München (DE)**

(56) References cited:
**JP-A- H0 466 305     US-A1- 2020 298 623**

**Description**

BACKGROUND OF THE INVENTION

Field of the Invention

The present invention relates to a tire having a belt layer, a band, and the like.

Background Art

To date, a tire having a belt layer and a band layer disposed inward of a tread portion in the tire radial direction has been known. For example, Japanese Laid-Open Patent Publication No. 2019-177838 suggests a tire in which a belt formed of two or more layers includes cords and a gauge between the cords of the two adjacent layers is specified to allow achievement of both noise performance and fuel economy.
However, in recent years, the tire disclosed in Japanese Laid-Open Patent Publication No. 2019-177838 has also been required to exhibit further improved durability and ride comfort during high-speed running according to enhancement of vehicle performance and development of infrastructures such as expressways.
US 2020/0298623 A1 discloses a tire comprising the features according to the preamble of claim 1.
JP H04 66305 A discloses a tire comprising features according to a related technology.
The present invention has been made in view of the aforementioned circumstances, and a main object of the present invention is to provide a tire that can achieve both durability and ride comfort during high-speed running.

SUMMARY OF THE INVENTION

The present invention is directed to a tire including a belt layer and a band layer. The belt layer includes at least one belt ply. The belt ply includes a belt cord formed of a single steel cord such that 60 to 140 belt cords are arranged per ply width of 5 cm. The band layer includes at least one band ply. The band ply includes a band cord disposed at an angle of not greater than 5° relative to a tire circumferential direction. The band cord has a flattened cross-section orthogonal to a longitudinal direction of the band cord.
In the tire of the present invention, an aspect ratio of the band cord is preferably 1.05 to 1.25.
In the tire of the present invention, the band cord is preferably formed of a heat-shrinkable organic fiber.
In the tire of the present invention, the organic fiber is preferably nylon.
In the tire of the present invention, the belt ply and the band ply satisfy the following expression (1),
[Math. 1]

$$0.30 \leq \frac{(G1 + G2) - (d1 + d2)}{(G1 + G2) + (d1 + d2)} \leq 0.45 \qquad \cdots (1)$$

in which

G1: a thickness, in a tire radial direction, of the belt ply that is in contact with the band ply,
G2: a thickness, in the tire radial direction, of the band ply that is in contact with the belt ply,
d1: a diameter of the belt cord in the tire radial direction,
d2: a diameter of the band cord in the tire radial direction.

In the tire of the present invention, in the belt ply, a product of a strength (N) per the one belt cord and a number (number of the belt cords) of the belt cords arranged per ply width of 5 cm is preferably 12000 to 22000 (N·the number of the belt cords).
In the tire of the present invention, the belt cord preferably has, on a surface, a ternary alloy-plated layer formed of copper (Cu), zinc (Zn), and cobalt (Co).
In the tire of the present invention, as a composition mass ratio of the ternary alloy-plated layer, preferably, a mass of the copper (Cu) is less than 65%, a mass of the zinc (Zn) is less than 35%, and a mass of the cobalt (Co) is less than 10%.
The tire of the present invention includes the belt layer and the band layer. The belt layer includes at least one belt ply. The belt ply includes the belt cord formed of a single steel cord such that 60 to 140 belt cords are arranged per ply width of 5 cm. The band layer includes at least one band ply. The band ply includes the band cord disposed at an angle of not greater than 5° relative to the tire circumferential direction. The band cord has a flattened cross-section orthogonal to the longitudinal direction of the band cord.

In such a tire, since the belt cords are arranged at a high density, a holding force is high, growth of the outer diameter of the tread portion during high-speed running can be inhibited, and durability during high-speed running can be enhanced. In the tire, since the band cord is flattened, the thickness of rubber between the belt cord and the band cord can be increased, stiffness of the tread portion is inhibited from being excessively enhanced due to the belt cords arranged at a high density, and ride comfort during high-speed running can be enhanced. Therefore, the tire of the present invention allows both durability and ride comfort during high-speed running to be achieved.

BRIEF DESCRIPTION OF THE DRAWINGS

FIG. 1 is a cross-sectional view of a tire according to one embodiment of the present invention;
FIG. 2 is a cross-sectional view of a belt layer and a band layer according to the present embodiment;
FIG. 3 is a schematic diagram illustrating a belt cord; and
FIG. 4 is a schematic diagram illustrating a band cord.

DETAILED DESCRIPTION

An embodiment of the present invention will be described below in detail with reference to the drawings.

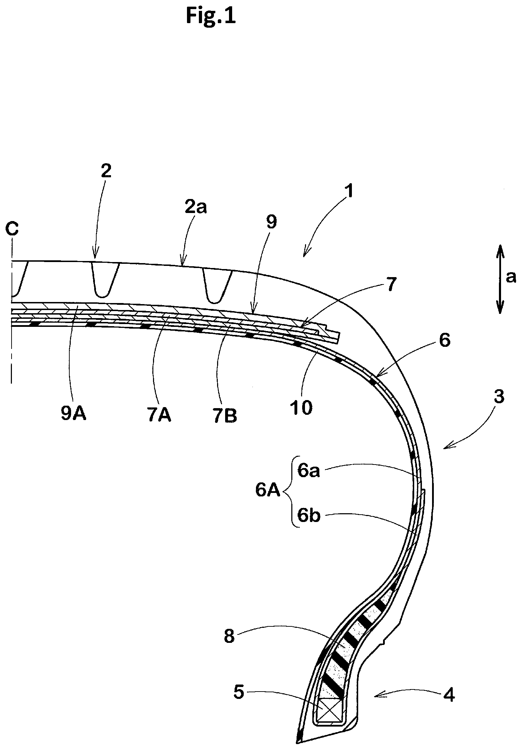

FIG. 1 is a tire meridian cross-sectional view of a tire 1 of the present embodiment including a rotation axis in a normal state. The "normal state" represents a state where, in a case where the tire 1 is a pneumatic tire, the tire 1 is mounted on a normal rim and is adjusted to have a normal internal pressure, and no load is applied to the tire. Hereinafter, unless otherwise specified, dimensions and the like of the components of the tire 1 are represented by values measured in the normal state.

When a standard system including a standard on which the tire 1 is based is provided, the "normal rim" represents a rim that is defined for each tire by the standard, and is, for example, "standard rim" in the JATMA standard, "Design Rim" in the TRA standard, or "Measuring Rim" in the ETRTO standard. When a standard system including a standard on which the tire 1 is based is not provided, the "normal rim" represents a rim having the smallest rim width in rims on which the tire can be mounted, and which do not cause air leakage and have the smallest rim diameter.

When a standard system including a standard on which the tire 1 is based is provided, the "normal internal pressure" represents an air pressure that is defined for each tire by each standard, and is "maximum air pressure" in the JATMA standard, the maximum value recited in the table "TIRE LOAD LIMITS AT VARIOUS COLD INFLATION PRESSURES" in the TRA standard, or "INFLATION PRESSURE" in the ETRTO standard. When a standard system including a standard on which the tire 1 is based is not provided, the "normal internal pressure" represents an air pressure defined for each tire by manufacturers or the like.

The tire 1 of the present embodiment is preferably used as a tire for a passenger car. In the description herein, the tire for a passenger car represents a pneumatic rubber tire which is produced on the assumption that the tire is mounted to a four-wheel traveling automobile and for which the normal load is not higher than 1000 kg.

The tire for a passenger car is not particularly limited as long as the normal load is not higher than 1000 kg. However, from the viewpoint of reducing excessive deformation at a tread portion 2, the tire for a passenger car is preferably applied to a tire for which the normal load is 900 kg, more preferably applied to a tire for which the normal load is 750 kg, and even more preferably applied to a tire for which the normal load is 700 kg. For the tire for a passenger car, the above-described normal internal pressure is 250 kPa.

The "normal load" represents a load that is defined by a standard, in a standard system including the standard on which the tire 1 is based, for each tire, and is the "maximum load capacity" in the JATMA standard, the maximum value recited in the table "TIRE LOAD LIMITS AT VARIOUS COLD INFLATION PRESSURES" in the TRA standard, or the "LOAD CAPACITY" in the ETRTO standard. When a standard system including a standard on which the tire 1 is based is not provided, the "normal load" represents a load defined for each tire by manufactures or the like.

The tire 1 is not limited to a tire for a passenger car, and can be applied to, for example, a heavy-duty tire, a tire for a motorcycle, a tire for a racing vehicle, and the like. The tire 1 having a belt layer 7 and a band layer 9 described below can be applied to various tires including, for example, tires that are made of resin by using thermoplastic elastomer and non-pneumatic tires the insides of which are not filled with pressurized air.

As shown in FIG. 1, the tire 1 of the present embodiment includes an annularly extending tread portion 2, a pair of sidewall portions 3 extending on both sides of the tread portion 2, and a pair of bead portions 4 extending so as to be continuous with the sidewall portions 3. The tire 1 of the present embodiment has a toroidal carcass 6 extending on and between bead cores 5 of the pair of bead portions 4, and the belt layer 7 disposed tire-radially outward of the carcass 6 and inward of the tread portion 2 in a tire radial direction a.

The tread portion 2 is preferably formed of an elastomer layer having at least one layer. For example, the tread portion 2 may have two or more layers of the elastomer layer stacked in the tire radial direction a, and may have a plurality of elastomer layers disposed in the tire axial direction. In the elastomer layer of the tread portion 2, for example, circumferential grooves extending in the tire circumferential direction, lateral grooves extending in the tire axial direction, sipes each having a groove width of not greater than 2 mm, and the like may be disposed as appropriate. Examples of the circumferential grooves include grooves that linearly extend or grooves extending so as to zigzag. A profile of an outer surface 2a of the tread portion 2 is, for example, formed by a single arc or by combining arcs having a plurality of curvatures.

The elastomer layer of the tread portion 2 is formed of, for example, isoprene-based rubber such as natural rubber and isoprene rubber, or diene-based rubber such as butadiene rubber, styrene-butadiene rubber, styrene-isoprene-butadiene rubber, chloroprene rubber, acrylonitrile butadiene rubber, and isobutylene-isoprene-rubber.

The sidewall portion 3 is preferably formed of an elastomer layer having at least one layer. In the sidewall portion 3, for example, two or more layers of the elastomer layer may be stacked in the tire axial direction, or a plurality of the elastomer layers may be disposed in the tire radial direction a. The elastomer layer of the sidewall portion 3 may be, for example, formed of the same component as that of the elastomer layer of the tread portion 2 or may be formed of a different component.

A boundary face between the elastomer layer of the tread portion 2 and the elastomer layer of the sidewall portion 3 is, for example, formed such that the tire-axially outer end is disposed outward of the tire-axially inner end in the tire radial direction a. The boundary face between the elastomer layer of the tread portion 2 and the elastomer layer of the sidewall portion 3 may be, for example, formed such that the tire-axially outer end is disposed inward of the tire-axially inner end in the tire radial direction a.

The carcass 6 includes at least one carcass ply 6A. In the present embodiment, the carcass 6 includes one carcass ply 6A. The carcass ply 6A is formed of, for example, an elastomer layer including a carcass cord (not shown) disposed at an angle of 75 to 90° relative to the tire circumferential direction. To the carcass cord, for example, an organic fiber cord formed of aromatic polyamide (aramid), rayon, polyester, or the like can be adopted. In the description herein, "A to B" represents "not less than A and not greater than B".

The carcass ply 6A includes, for example, a body portion 6a extending from the tread portion 2 through the sidewall portions 3 to the bead cores 5 of the bead portions 4, and turned-up portions 6b that are continuous with the body portion 6a and are turned up around the bead cores 5 from the inner side toward the outer side in the tire axial direction. For example, an outer end of the turned-up portion 6b in the tire radial direction a may extend to the belt layer 7. For example, a bead apex 8 is disposed between the body portion 6a and each turned-up portion 6b of the carcass ply 6A so as to extend outwardly from the bead core 5 in the tire radial direction. The bead apex 8 is formed of, for example, an elastomer layer.

In the bead portions 4, for example, bead reinforcing layers (not shown) may be disposed outward of the turned-up portions 6b of the carcass 6 in the tire axial direction. The bead reinforcing layer may be formed of, for example, an elastomer layer having the same component as that of the bead apex 8, or may be formed of an elastomer layer having a different component.

In the bead portions 4, for example, chafers (not shown) may be disposed outward of the turned-up portions 6b of the carcass 6 in the tire axial direction. In a case where the bead reinforcing layer and the chafer are disposed, the chafer is preferably disposed outward of the bead reinforcing layer in the tire axial direction.

The belt layer 7 includes at least one belt ply and preferably includes two or more belt plies. In the present embodiment, the belt layer 7 includes two belt plies 7A, 7B. The two belt plies 7A, 7B include, for example, a first belt ply 7A disposed on the outer side in the tire radial direction and a second belt ply 7B disposed inward of the first belt ply 7A. The belt layer 7 having such a structure enhances a holding force and can enhance durability of the tire 1 during high-speed running.

In the present embodiment, the band layer 9 is disposed outward of the belt layer 7 in the tire radial direction a and inward of the tread portion 2 in the tire radial direction a. The band layer 9 includes at least one band ply. In the present embodiment, the band layer 9 includes one band ply 9A. The band layer 9 having such a structure enhances holdability of the tread portion 2 and can further enhance durability of the tire 1 also during high-speed running.

The tire 1 of the present embodiment has an inner liner 10 disposed inward of the carcass 6. The inner liner 10 is preferably formed of an air-impermeable elastomer layer. The elastomer layer of the inner liner 10 is formed of, for example, isobutylene-isoprene-rubber or halogenated isobutylene-isoprene-rubber. The inner liner 10 having such a structure is suitable for maintaining air pressure to which the tire 1 is inflated.

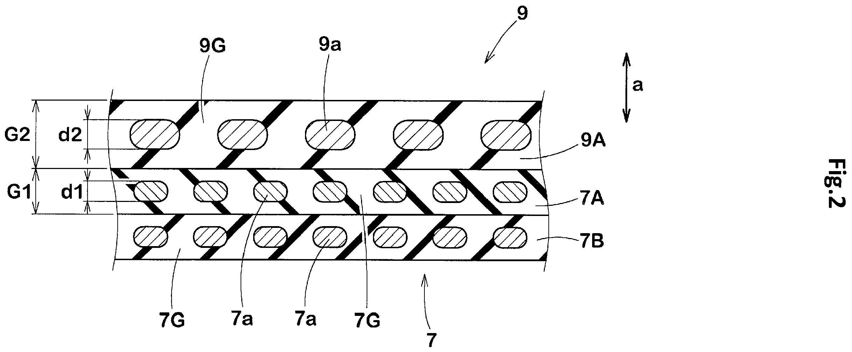

FIG. 2 is a cross-sectional view of the belt layer 7 and the band layer 9 according to the present embodiment. As shown in FIG. 2, in the present embodiment, the belt plies 7A and 7B of the belt layer 7 each include a belt cord 7a formed of a single steel cord and an elastomer composition 7G for covering the belt cord 7a. The belt plies 7A, 7B having such a structure are expanded less easily than a twisted cord, a holding force can be enhanced, and durability of the tire 1 during high-speed running can be enhanced.

In the present embodiment, the elastomer composition 7G of the belt plies 7A and 7B exhibits rubber elasticity. Examples of the elastomer composition 7G include a rubber composition and a thermoplastic elastomer composition. In a case where the elastomer composition 7G is a rubber composition, examples of the rubber component include isoprene-based rubber, butadiene-based rubber, styrene-butadiene rubber, nitrile rubber, and isobutylene-isoprene-rubber. In a case where the elastomer composition 7G is a thermoplastic elastomer composition, examples of the elastomer include thermoplastic polyurethane, and block copolymers such as styrene-butadiene block copolymer and styrene-ethylene-butylene-styrene block copolymer.

In the present embodiment, the belt cord 7a is a plated or ternary alloy-plated one. As the plating treatment, for example, plating treatment using zinc, copper, and the like can be performed. The belt cord 7a having, on the surface, a ternary alloy-plated layer formed of copper (Cu), zinc (Zn), and cobalt (Co) is preferably formed. As a composition mass ratio of the ternary alloy-plated layer, preferably, a mass of the copper (Cu) is less than 65%, a mass of the zinc (Zn) is less than 35%, and a mass of the cobalt (Co) is less than 10%. The belt cord 7a having such a structure has good adhesiveness to the elastomer composition 7G, and the belt cord 7a and the elastomer composition 7G can cooperate to generate a stress also during high-speed running, and durability of the tire 1 during high-speed running can be enhanced.

In the belt cord 7a of the present embodiment, the cross-section orthogonal to the longitudinal direction of the belt cord 7a is flattened. In the description herein, the flattened means that an aspect ratio between the major axis and the minor axis of the cross-section is not less than 1.05. The belt cord 7a may have, for example, a round cross-section. In the description herein, the round means that the aspect ratio of the cross-section is less than 1.05.

The belt cord 7a is, for example, disposed at an angle of 10 to 30° relative to the tire circumferential direction. The belt cord 7a of the first belt ply 7A and the belt cord 7a of the second belt ply 7B are preferably inclined in the opposite directions relative to the tire circumferential direction. The belt layer 7 having such a structure enhances a holding force of the tread portion 2 in a well-balanced manner, and can enhance durability of the tire 1 during high-speed running. The angle of the belt cord 7a represents an angle in the tire 1 in the normal state, and can be confirmed by, for example, partially peeling the tread portion 2.

In each of the belt plies 7A, 7B, 60 to 140 belt cords 7a are preferably arranged per ply width of 5 cm. The number n1 of the belt cords 7a arranged per ply width of 5 cm represents the number of the belt cords 7a arranged per ply width of 5 cm in the direction orthogonal to the longitudinal direction of the belt cord 7a. The number n1 of the arranged belt cords 7a can be, for example, obtained by measurement in a range of the belt ply 7A, 7B including a tire equator C.

When the number n1 of the belt cords 7a arranged per ply width of 5 cm is not less than 60, a holding force of the tread portion 2 can be enhanced, and durability of the tire 1 during high-speed running can be enhanced. From such a viewpoint, the number n1 of the arranged belt cords 7a is more preferably not less than 70 and even more preferably not less than 80.

When the number n1 of the belt cords 7a arranged per ply width of 5 cm is not greater than 140, stiffness of the tread portion 2 is inhibited from being excessively enhanced, and ride comfort exhibited by the tire 1 during high-speed running can be enhanced. From such a viewpoint, the number n1 of the arranged belt cords 7a is more preferably not greater than 130 and even more preferably not greater than 120.

In the tire 1 having such a structure, since the belt cords 7a are arranged at a high density, a holding force is high, growth of the outer diameter of the tread portion 2 during high-speed running can be inhibited, and durability during high-speed running can be enhanced.

A diameter d1 of the belt cord 7a in the tire radial direction a is preferably not greater than 0.2 mm. In the belt cord 7a having such a structure, since the diameter d1 of the belt cord 7a in the tire radial direction a is small, stiffness in the tire radial direction a can be reduced and ride comfort exhibited by the tire 1 during high-speed running can be enhanced.

From such a viewpoint, the diameter d1 of the belt cord 7a in the tire radial direction a is more preferably not greater than 0.17 mm. The lower limit value of the diameter d1 of the belt cord 7a is, but is not particularly limited to, preferably not less than 0.1 mm and more preferably not less than 0.12 mm. The diameter d1 of the belt cord 7a in the tire radial direction a is a diameter along the tire radial direction a.

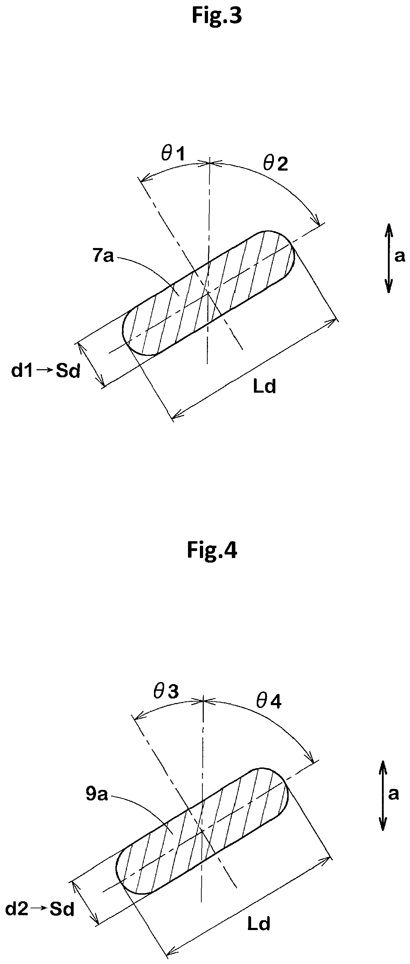

FIG. 3 is a schematic diagram illustrating the belt cord 7a. As shown in FIG. 3, in a case where the belt cord 7a having a flattened cross-section is inclined relative to the tire radial direction a, one axis, of a minor axis Sd and a major axis Ld of the belt cord 7a having the flattened cross-section, having a smaller angle relative to the tire radial direction a is set as the diameter d1 in the tire radial direction a. In FIG. 3, an angle $\theta 1$ of the minor axis Sd direction relative to the tire radial direction a is less than an angle $\theta 2$ of the major axis Ld direction relative thereto, so that the minor axis Sd is set as the diameter d1 in the tire radial direction a.

As shown in FIG. 2, in each of the belt plies 7A, 7B, a product (d1×n1) of the diameter d1 (mm) of the belt cord 7a and the number n1 (the number of the belt cords) of the belt cords 7a arranged per ply width of 5 cm is preferably not greater than 25 (mm·the number of the belt cords). This product (d1×n1) represents a proportion of the belt cords 7a relative to the width direction of the belt ply 7A, 7B and represents an index for an interval between the belt cords 7a adjacent to each other in the width direction.

When the product (d1×n1) is not greater than 25 (mm·the number of the belt cords), stiffness of the tread portion 2 is inhibited from being excessively enhanced, and ride comfort exhibited by the tire 1 during high-speed running can be enhanced. From such a viewpoint, the product (d1×n1) is more preferably not greater than 23 (mm·the number of the belt cords) and even more preferably not greater than 20 (mm·the number of the belt cords).

In each of the belt plies 7A, 7B, the product (d1×n1) of the diameter d1 (mm) of the belt cord 7a and the number n1 (the number of the belt cords) of the belt cords 7a arranged per ply width of 5 cm is preferably not less than 10 (mm·the number of the belt cords). When the product (d1×n1) is not less than 10 (mm·the number of the belt cords), holdability of the tread portion 2 is enhanced and durability of the tire 1 during high-speed running can be enhanced. From such a viewpoint, the product (d1×n1) is more preferably not less than 12 (mm·the number of the belt cords) and even more preferably not less than 15 (mm·the number of the belt cords).

In each of the belt plies 7A, 7B, a product (s1×n1) of a strength s1 (N) per one belt cord 7a and the number n1 (the number of the belt cords) of the belt cords 7a arranged per ply width of 5 cm is preferably 12000 to 22000 (N·the number of the belt cords). The strength s1 (N) per one belt cord 7a represents a tensile force at break of one belt cord 7a at 25°C.

When the product (s1×n1) is not less than 12000 (N·the number of the belt cords), the holdability of the tread portion 2 is enhanced and durability of the tire 1 during high-speed running can be enhanced. From such a viewpoint, the product (s1×n1) is more preferably not less than 13500 (N·the number of the belt cords) and even more preferably not less than 15000 (N·the number of the belt cords).

When the product (s1×n1) is not greater than 22000 (N the number of the belt cords), stiffness of the tread portion 2 is inhibited from being excessively enhanced, and ride comfort exhibited by the tire 1 during high-speed running can be enhanced. From such a viewpoint, the product (s1×n1) is more preferably not greater than 21000 (N·the number of the belt cords) and even more preferably not greater than 20000 (N·the number of the belt cords).

In the present embodiment, the band ply 9A includes a band cord 9a disposed at an angle of not greater than 5° relative to the tire circumferential direction and an elastomer composition 9G for covering the band cord 9a. The elastomer composition 9G of the band ply 9A preferably exhibits rubber elasticity like the elastomer composition 7G of the belt plies 7A, 7B. For example, the elastomer composition 9G may be the same as the elastomer composition 7G.

In the band cord 9a of the present embodiment, the cross-section orthogonal to the longitudinal direction of the band cord 9a is flattened. In the tire 1 having such a structure, a thickness of rubber can be increased between the belt cord 7a and the band cord 9a, stiffness of the tread portion 2 is inhibited from being excessively enhanced due to the belt cords 7a arranged at a high density, and ride comfort during high-speed running can be enhanced. Therefore, the tire 1 of the present embodiment can exhibit both durability and ride comfort during high-speed running.

In a more preferable mode, an aspect ratio of the band cord 9a is 1.05 to 1.25. When the aspect ratio of the band cord 9a is not less than 1.05, the thickness of the rubber can be assuredly increased between the belt cord 7a and the band cord 9a, and ride comfort exhibited by the tire 1 during high-speed running can be enhanced. From such a viewpoint, the aspect ratio of the band cord 9a is more preferably not less than 1.08 and even more preferably not less than 1.10.

When the aspect ratio of the band cord 9a is not greater than 1.25, excessive change between stiffness of the tread portion 2 in the tire axial direction and that in the tire radial direction a is inhibited, and durability of the tire 1 during high-speed running can be enhanced. From such a viewpoint, the aspect ratio of the band cord 9a is more preferably not greater than 1.22 and even more preferably not greater than 1.20.

The band cord 9a is formed of, for example, an organic fiber. In the present embodiment, the band cord 9a is formed of a heat-shrinkable organic fiber. The band cord 9a having such a structure can enhance a holding force of the tread portion 2 by heat generation during high-speed running, whereby durability of the tire 1 during high-speed running can be further enhanced.

Examples of the heat-shrinkable organic fiber include aliphatic polyamides (nylon), polyethylene, and polyester. In the present embodiment, the organic fiber is nylon. Nylon has excellent strength and heat-shrinkability, and is suitable for enhancing durability of the tire 1 during high-speed running.

A diameter d2 of the band cord 9a in the tire radial direction a is preferably 0.40 to 0.70 mm. The diameter d2 of the band cord 9a in the tire radial direction a is a diameter along the tire radial direction a.

When the diameter d2 of the band cord 9a in the tire radial direction a is not less than 0.40 mm, the holdability of the tread portion 2 is assuredly enhanced and both durability of the tire 1 and ride comfort exhibited by the tire 1 during high-speed running can be achieved. From such a viewpoint, the diameter d2 of the band cord 9a is more preferably not less than 0.50 mm and even more preferably not less than 0.55 mm.

When the diameter d2 of the band cord 9a in the tire radial direction a is not greater than 0.70 mm, the thickness of the tread portion 2 is inhibited from being increased and ride comfort exhibited by the tire 1 during high-speed running can be enhanced. From such a viewpoint, the diameter d2 of the band cord 9a is more preferably not greater than 0.65 mm.

FIG. 4 is a schematic diagram illustrating the band cord 9a. As shown in FIG. 4, in a case where the band cord 9a having a flattened cross-section is inclined relative to the tire radial direction a, one axis, of a minor axis Sd and a major axis Ld of the band cord 9a having the flattened cross-section, having a smaller angle relative to the tire radial direction a is set as the diameter d2 in the tire radial direction a. In FIG. 4, an angle θ3 of the minor axis Sd direction relative to the tire radial direction a is less than an angle θ4 of the major axis Ld direction relative thereto. Therefore, the minor axis Sd is set as the diameter d2 in the tire radial direction a.

As shown in FIG. 2, in the band ply 9A, 35 to 65 band cords 9a are preferably arranged per ply width of 5 cm. The number n2 of the band cords 9a arranged per ply width of 5 cm represents the number of the band cords 9a arranged per ply width of 5 cm in the direction orthogonal to the longitudinal direction of the band cord 9a.

When the number n2 of the band cords 9a arranged per ply width of 5 cm is not less than 35, the holdability of the tread portion 2 is assuredly enhanced and durability of the tire 1 during high-speed running can be enhanced. From such a viewpoint, the number n2 of the arranged band cords 9a is more preferably not less than 40 and even more preferably not less than 45.

When the number n2 of the band cords 9a arranged per ply width of 5 cm is not greater than 65, stiffness of the tread portion 2 is inhibited from being excessively enhanced and ride comfort exhibited by the tire 1 during high-speed running can be enhanced. From such a viewpoint, the number n2 of the arranged band cords 9a is more preferably not greater than 60 and even more preferably not greater than 55.

In the band ply 9A, a product (d2×n2) of the diameter d2 (mm) of the band cord 9a in the tire radial direction a and the number n2 (the number of the band cords) of the band cords 9a arranged per ply width of 5 cm is preferably 15 to 45. This product (d2×n2) represents a proportion of the band cords 9a relative to the width direction of the band ply 9A and represents an index for an interval between the adjacent band cords 9a.

When the product (d2×n2) is not less than 15, the holdability of the tread portion 2 is assuredly enhanced and durability of the tire 1 during high-speed running can be enhanced. From such a viewpoint, the product (d2×n2) is more preferably not less than 20.

When the product (d2×n2) is not greater than 45, separation caused by a small interval between the band cords 9a is inhibited and durability of the tire 1 can be enhanced. From such a viewpoint, the product (d2×n2) is more preferably not greater than 40.

The belt ply 7A and the band ply 9A satisfy the following expression (1),

[Math. 1]

$$0.30 \leq \frac{(G1 + G2) - (d1 + d2)}{(G1 + G2) + (d1 + d2)} \leq 0.45 \qquad \cdots (1)$$

where

G1: thickness, in the tire radial direction, of the belt ply 7A that is in contact with the band ply 9A
G2: thickness, in the tire radial direction, of the band ply 9A that is in contact with the belt ply 7A
d1: diameter of the belt cord 7a in the tire radial direction
d2: diameter of the band cord 9a in the tire radial direction.

The belt ply 7A and the band ply 9A having such a structure allow a thickness of rubber between the belt cord 7a and the band cord 9a adjacent to each other in the tire radial direction a to be appropriately maintained and allow both durability of the tire 1 and ride comfort exhibited by the tire 1 during high-speed running to be achieved.

The thickness G1 of the belt ply 7A is the maximum thickness, in the tire radial direction a, of the elastomer composition 7G of the belt ply 7A. The thickness G2 of the band ply 9A is the maximum thickness, in the tire radial direction a, of the elastomer composition 9G of the band ply 9A. The thickness G1 of the belt ply 7A and the thickness G2 of the band ply 9A can be, for example, confirmed from the cross-section of the tread portion 2. On the cross-section of the tread portion 2, in a case where the boundary of the belt ply 7A is unclear, the belt ply 7A may be, for example, defined by setting, as boundaries, a mid-position between the belt cords 7a adjacent to each other in the tire radial direction a and a mid-position between the belt cord 7a and the band cord 9a.

Although the particularly preferred embodiment of the present invention has been described above in detail, the present invention is not limited to the above-described embodiment, and various modifications can be made to implement the present invention within the scope of the appended claims.

[Examples]

Tires having the basic structure shown in FIG. 1 were produced as test tires based on the specifications indicated in Table 1 and Table 2. The tires produced as the test tires were tested for durability and ride comfort during high-speed running. The common specifications and test methods were as follows.

<Common specifications>

Tire size: 195/65R15
Rim size: 15×6JJ
Belt cord: single steel cord

<Ride comfort during high-speed running>

A front-wheel-drive medium-size passenger car in which the test tires having an air pressure adjusted to 230 kPa were mounted to all wheels was used as a test vehicle. When the test vehicle was caused to run on a test course at 100 km/ hour, a test driver made sensory evaluation for ride comfort by five-point evaluation with 5 being the best score. The same test was performed by 20 test drivers, and the total point was calculated. The result is indicated as an index with the total point in comparative example 1 being 100. The greater the value is, the more excellent ride comfort during high-speed running is.

<Durability during high-speed running>

The test tire having an air pressure adjusted to 150 kPa was thermally degraded for 168 hours in an environment in which the temperature was 80°C, and was thereafter mounted to a drum tester, and running with the tire was performed under a load of 6.96 kN at 80 km/hour, and a distance was measured until occurrence of air leakage or deformation of the sidewall portion. The result is indicated as an index with the result of comparative example 1 being 100. The greater the value is, the more excellent durability during high-speed running is.

Test results are indicated in Table 1 and Table 2.

[Table 1]

| | Comp. Ex. 1 | Comp. Ex. 2 | Comp. Ex. 3 | Ex. 1 | Ex. 2 | Ex. 3 |
|---|---|---|---|---|---|---|
| Aspect ratio of belt cord | 1.00 | 1.00 | 1.00 | 1.00 | 1.00 | 1.00 |
| Diameter d1 (mm) of belt cord | 0.295 | 0.295 | 0.295 | 0.295 | 0.295 | 0.295 |
| The number n1 (number of belt cords) of belt cords arranged per ply width of 5 cm | 92 | 50 | 50 | 92 | 92 | 92 |
| Strength s1 (N) of belt cord | 198 | 198 | 198 | 198 | 198 | 198 |
| Product s1×n1 | 18216 | 9900 | 9900 | 18216 | 18216 | 18216 |
| Surface treatment of belt cord | binary alloy-plated | binary alloy-plated | binary alloy-plated | binary alloy-plated | binary alloy-plated | ternary-alloy plated |
| Thickness G1 (mm) of belt ply | 0.73 | 0.73 | 0.73 | 1.20 | 0.73 | 0.73 |
| Material of band cord | nylon | nylon | aramid | nylon | nylon | nylon |
| Aspect ratio of band cord | 1.00 | 1.18 | 1.16 | 1.16 | 1.16 | 1.16 |
| Diameter d2 (mm) of band cord | 0.66 | 0.56 | 0.45 | 0.45 | 0.45 | 0.45 |
| Thickness G2 (mm) of band ply | 1.20 | 1.06 | 0.82 | 0.82 | 0.82 | 0.82 |
| Value (G1+G2-d1-d2)/ (G1+G2+d1+d2) | 0.34 | 0.35 | 0.35 | 0.46 | 0.35 | 0.35 |

(continued)

|  | Comp. Ex. 1 | Comp. Ex. 2 | Comp. Ex. 3 | Ex. 1 | Ex. 2 | Ex. 3 |
|---|---|---|---|---|---|---|
| Ride comfort (index) | 100 | 106 | 103 | 118 | 124 | 124 |
| Durability (index) | 100 | 95 | 95 | 105 | 116 | 121 |
| Overall performance (Total) | 200 | 201 | 198 | 223 | 240 | 245 |

[Table 2]

|  | Ex. 4 | Ex. 5 | Ex. 6 | Ex. 7 | Ex. 8 | Ex. 9 |
|---|---|---|---|---|---|---|
| Aspect ratio of belt cord | 1.00 | 1.00 | 1.00 | 1.00 | 1.05 | 1.05 |
| Diameter d 1 (mm) of belt cord | 0.295 | 0.295 | 0.295 | 0.295 | 0.295 | 0.295 |
| The number n1 (number of belt cords) of belt cords arranged per ply width of 5 cm | 65 | 125 | 92 | 92 | 92 | 92 |
| Strength s1 (N) of belt cord | 198 | 198 | 198 | 198 | 198 | 198 |
| Product s1×n1 | 12870 | 24750 | 18216 | 18216 | 18216 | 18216 |
| Surface treatment of belt cord | binary alloy-plated | binary alloy-plated | binary alloy-plated | binary alloy-plated | ternary-alloy plated | ternary-alloy plated |
| Thickness G1 (mm) of belt ply | 0.73 | 0.73 | 0.73 | 0.73 | 0.73 | 0.73 |
| Material of band cord | nylon | nylon | nylon | nylon | nylon | aramid |
| Aspect ratio of band cord | 1.16 | 1.16 | 1.05 | 1.25 | 1.16 | 1.16 |
| Diameter d2 (mm) of band cord | 0.45 | 0.45 | 0.45 | 0.45 | 0.45 | 0.45 |
| Thickness G2 (mm) of band ply | 0.82 | 0.82 | 0.82 | 0.82 | 0.82 | 0.82 |
| Value (G1+G2-d1-d2)/ (G1+G2+d1+d2) | 0.35 | 0.35 | 0.35 | 0.35 | 0.35 | 0.35 |
| Ride comfort (index) | 124 | 120 | 120 | 124 | 120 | 118 |
| Durability (index) | 112 | 121 | 116 | 111 | 125 | 125 |
| Overall performance (Total) | 236 | 241 | 236 | 235 | 245 | 243 |

According to the test results, the tires of the examples exhibited excellent durability and ride comfort during high-speed running as compared with the tires of the comparative examples, and the overall performance determined as the total of values of the respective performances was good in the tires of the examples, so that it was confirmed that both durability and ride comfort during high-speed running were able to be achieved.

**Claims**

1. A tire (1) comprising:

a belt layer (7); and
a band layer (9), wherein
the belt layer (7) includes at least one belt ply (7A),
the belt ply (7A) includes a belt cord (7a) formed of a single steel cord such that 60 to 140 belt cords (7a) are arranged per ply width of 5 cm,
the band layer (9) includes at least one band ply (9A),

the band ply (9A) includes a band cord (9a) disposed at an angle of not greater than 5° relative to a tire circumferential direction, and

the band cord (9a) has a flattened cross-section orthogonal to a longitudinal direction of the band cord (9a),

**characterized in that**
the belt ply (7A) and the band ply (9A) satisfy the following expression (1), [Math. 1]

$$0.30 \leq \frac{(G1 + G2) - (d1 + d2)}{(G1 + G2) + (d1 + d2)} \leq 0.45 \qquad \cdots (1)$$

in which

G1: a thickness, in a tire radial direction, of the belt ply (7A) that is in contact with the band ply (9A),
G2: a thickness, in the tire radial direction, of the band ply (9A) that is in contact with the belt ply (7A),
d1: a diameter of the belt cord (7a) in the tire radial direction,
d2: a diameter of the band cord (9a) in the tire radial direction.

2. The tire (1) according to claim 1, wherein an aspect ratio of the band cord (9a) is 1.05 to 1.25.

3. The tire (1) according to claim 1 or 2, wherein the band cord (9a) is formed of a heat-shrinkable organic fiber.

4. The tire (1) according to claim 3, wherein the organic fiber is nylon.

5. The tire (1) according to any one of claims 1 to 4, wherein, in the belt ply (7A, 7B), a product (s1×n1)) of a strength (s1) (N) per the one belt cord (7a) and a number n1 (number of the belt cords) of the belt cords (7a) arranged per ply width of 5 cm is 12000 to 22000 (N·the number of the belt cords).

6. The tire (1) according to any one of claims 1 to 5, wherein the belt cord (7a) has, on a surface, a ternary alloy-plated layer formed of copper (Cu), zinc (Zn), and cobalt (Co).

7. The tire (1) according to claim 6, wherein, as a composition mass ratio of the ternary alloy-plated layer, a mass of the copper (Cu) is less than 65%, a mass of the zinc (Zn) is less than 35%, and a mass of the cobalt (Co) is less than 10%.

**Patentansprüche**

1. Reifen (1), umfassend:

eine Gürtellage (7); und
eine Bandlage (9), wobei
die Gürtellage (7) mindestens eine Gürtelschicht (7A) umfasst,
die Gürtelschicht (7A) einen Gürtelkord (7a) umfasst, der aus einem einzelnen Stahlkord gebildet ist, so dass 60 bis 140 Gürtelkorde (7a) pro Schichtbreite von 5 cm angeordnet sind,
die Bandlage (9) mindestens eine Bandschicht (9A) umfasst,
die Bandschicht (9A) einen Bandkord (9a) umfasst, der unter einem Winkel, welcher nicht größer als 5° ist, bezogen auf eine Reifenumfangsrichtung angeordnet ist, und
der Bandkord (9a) rechtwinklig zu einer Längsrichtung des Bandkords (9a) einen abgeflachten Querschnitt aufweist,

**dadurch gekennzeichnet, dass**
die Gürtelschicht (7A) und die Bandschicht (9A) den folgenden Ausdruck (1) erfüllen,
[Math. 1]

$$0.30 \leq \frac{(G1 + G2) - (d1 + d2)}{(G1 + G2) + (d1 + d2)} \leq 0.45 \qquad \cdots \; (1)$$

in welchem

G1: eine Dicke der Gürtelschicht (7A), die mit der Bandschicht (9A) in Kontakt steht, in einer Reifenradialrichtung ist,

G2: eine Dicke der Bandschicht (9A), die mit der Gürtelschicht (7A) in Kontakt steht, in der Reifenradialrichtung ist,

d1: ein Durchmesser des Gürtelkords (7a) in der Reifenradialrichtung ist,

d2: ein Durchmesser des Bandkords (9a) in der Reifenradialrichtung ist.

2. Reifen (1) nach Anspruch 1, wobei ein Aspektverhältnis des Bandkords (9a) 1,05 bis 1,25 beträgt.

3. Reifen (1) nach Anspruch 1 oder 2, wobei der Bandkord (9a) aus einer mittels Wärme schrumpfbaren organischen Faser gebildet ist.

4. Reifen (1) nach Anspruch 3, wobei die organische Faser Nylon ist.

5. Reifen (1) nach einem der Ansprüche 1 bis 4, wobei in der Gürtelschicht (7A, 7B) ein Produkt (s1 × n1) einer Festigkeit (s1) (N) bezogen auf den einen Gürtelkord (7a) und eine Anzahl n1 (Anzahl der Gürtelkorde) der Gürtelkorde (7a), die pro Schichtbreite von 5 cm angeordnet sind, 12000 bis 22000 (N · die Anzahl der Gürtelkorde) beträgt.

6. Reifen (1) nach einem der Ansprüche 1 bis 5, wobei der Gürtelkord (7a) an einer Oberfläche eine ternäre legierungsplattierte Lage aufweist, die aus Kupfer (Cu), Zink (Zn) und Kobalt (Co) gebildet ist.

7. Reifen (1) nach Anspruch 6, wobei als ein Zusammensetzungs-Massenverhältnis der ternären legierungsplattierten Lage eine Masse des Kupfers (Cu) kleiner als 65% ist, eine Masse des Zinks (Zn) kleiner als 35% ist und eine Masse des Kobalts (Co) kleiner als 10% ist.

**Revendications**

1. Pneumatique (1) comprenant :

une couche de ceinture (7) ; et
une couche de bande (9), dans lequel
la couche de ceinture (7) inclut au moins une nappe de ceinture (7A),
la nappe de ceinture (7A) inclut un câblé de ceinture (7a) formé d'un câblé simple en acier de telle sorte que 60 à 140 câblés de ceinture (7a) sont agencés par largeur de nappe de 5 cm,
la couche de bande (9) inclut au moins une nappe de bande (9A),
la nappe de bande (9A) inclut un câblé de bande (9a) disposé sous un angle qui n'est pas supérieur à 5° relativement à une direction circonférentielle du pneumatique, et
le câblé de bande (9a) a une section transversale aplatie orthogonale à une direction longitudinale du câblé de bande (9a),
**caractérisé en ce que**
la nappe de ceinture (7A) et la nappe de bande (9A) satisfont à l'expression (1) suivante :
[math. 1]

$$0.30 \leq \frac{(G1 + G2) - (d1 + d2)}{(G1 + G2) + (d1 + d2)} \leq 0.45 \qquad \cdots \; (1)$$

dans laquelle
G1 : une épaisseur, dans une direction radiale du pneumatique, de la nappe de ceinture (7A) qui est en contact avec la nappe de bande (9A),

G2 : une épaisseur, dans la direction radiale du pneumatique, de la nappe de bande (9A) qui est en contact avec la nappe de ceinture (7A),

d1 : un diamètre du câblé de ceinture (7a) dans la direction radiale du pneumatique,

d2 : un diamètre du câblé de bande (9a) dans la direction radiale du pneumatique.

2. Pneumatique (1) selon la revendication 1, dans lequel un rapport d'aspect du câblé de bande (9a) est de 1,05 à 1,25.

3. Pneumatique (1) selon la revendication 1 ou 2, dans lequel le câblé de bande (9a) est formé d'une fibre organique thermorétractable.

4. Pneumatique (1) selon la revendication 3, dans lequel la fibre organique est du nylon.

5. Pneumatique (1) selon l'une quelconque des revendications 1 à 4, dans lequel, dans la nappe de ceinture (7A, 7B), un produit $(s1 \times n1)$ d'une résistance $(s1)$ (N) pour ledit un câblé de ceinture (7a) et s'un nombre $(n1)$ (nombre de câblés de ceinture) des câblés de ceinture (7a) agencés par largeur de nappe de 5 cm est de 12 000 à 22 000 (N·le nombre de câblés de ceinture).

6. Pneumatique (1) selon l'une quelconque des revendications 1 à 5, dans lequel le câblé de ceinture (7a) a, sur une surface, une couche plaquée en alliage ternaire formée de cuivre (Cu), de zinc (Zn) et de cobalt (Co).

7. Pneumatique (1) selon la revendication 6, dans lequel, à titre de rapport massique de composition de la couche plaquée en alliage ternaire, une masse du cuivre (Cu) est inférieure à 65 %, une masse du zinc (Zn) est inférieure à 35 %, et une masse du cobalt (Co) est inférieure à 10 %.

**Fig.1**

# Fig.2

# Fig.3

# Fig.4

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- JP 2019177838 A
- US 20200298623 A1
- JP H0466305 A